# EUROPEAN PATENT SPECIFICATION

(11) **EP 4 344 083 B1**
(45) Date of publication and mention of the grant of the patent: **09.12.2026**
(21) Application number: 21940742.6
(22) Date of filing: 19.05.2021
(51) Int. Cl.: H04B 7/08, H04B 11/00, H04B 13/02, H04B 1/06

(54) **RECEIVER AND RECEIVING METHOD**
EMPFÄNGER UND EMPFANGSVERFAHREN
RÉCEPTEUR ET PROCÉDÉ DE RÉCEPTION

(43) Date of publication of application: 27.03.2024
(73) Proprietor: NTT, Inc., Tokyo 100-8116 (JP)
(72) Inventor: FUKUMOTO Hiroyuki, Musashino-shi, Tokyo 180-8585 (JP); FUJINO Yosuke, Musashino-shi, Tokyo 180-8585 (JP); TSUBAKI Toshimitsu, Musashino-shi, Tokyo 180-8585 (JP); OIWA Miharu, Musashino-shi, Tokyo 180-8585 (JP); ITO Yuya, Musashino-shi, Tokyo 180-8585 (JP); NAKANO Marina, Musashino-shi, Tokyo 180-8585 (JP)
(74) Representative: Santarelli
(86) International application number: PCT/JP2021/018901
(87) International publication number: WO 2022/244125

(56) References cited:
- WO-A1-2021/001870
- JP-A- H02 141 134
- JP-A- H1 051 268
- US-A- 5 844 951
- US-A1- 2007 071 077
- US-A1- 2019 068 273
- US-A1- 2022 271 848
- DESSALERMOS SPYRIDON: "Adaptive Reception for Underwater Communications", DOCTORAL DISSERTATION, NAVAL POSTGRADUATE SCHOOL, 1 June 2011 (2011-06-01), XP093083296, Retrieved from the Internet <URL:https://apps.dtic.mil/sti/pdfs/ADA547833.pdf> [retrieved on 20230919]
- FUKUMOTO HIROYUKI ET AL: "Field Experiments Demonstrating Mbps-Class Underwater Acoustic Communication with Spatio-Temporal Equalization", GLOBAL OCEANS 2020: SINGAPORE - U.S. GULF COAST, IEEE, 5 October 2020 (2020-10-05), pages 1 - 6, XP033896185, DOI: 10.1109/IEEECONF38699.2020.9389018
- YOUNGCHOL CHOI ; YONG-KON LIM: "Broadband FIR Beamformer for Underwater Aoustic Communication", OCEANS 2006 - ASIA PACIFIC, IEEE, PI, 1 May 2006 (2006-05-01), Pi , pages 1 - 4, XP031167931, ISBN: 978-1-4244-0137-6

## Description

### Technical Field

The present invention relates to a receiver and a receiving method.

### Background Art

As conventionally known, absorption and attenuation of radio waves in water are extremely large. Therefore, it is difficult to perform wireless communication using radio waves in the same way as on the land. Therefore, a sound wave of 1 MHz or less having relatively small absorption attenuation is used for wireless communication in water. As a form of a receiver for underwater communication, there are a method of improving a reception signal-to-noise ratio (SNR) by arranging a plurality of wave receivers in an array, performing finite impulse response (FIR) filtering processing on reception signals received by the respective wave receivers, and combining the signals received by the respective wave receivers (for example, refer to, Non Patent Literature 1), and a method of suppressing a long delay wave (for example, refer to Non Patent Literature 2).

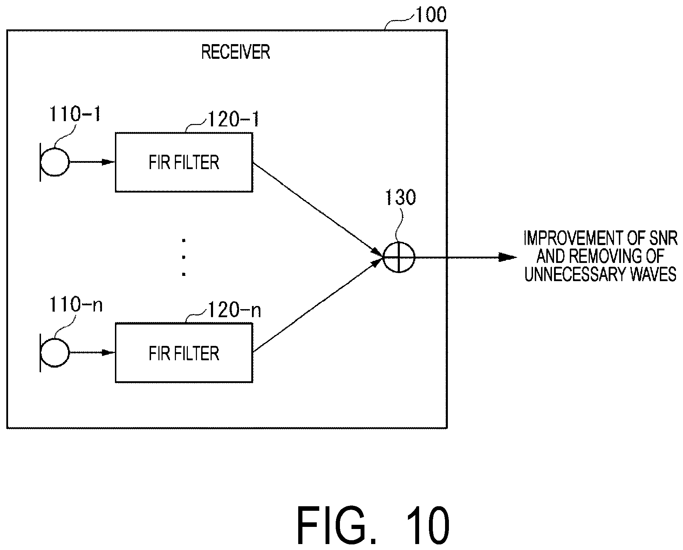

Fig. 10 is a diagram illustrating a configuration of a conventional receiver 100. As illustrated in Fig. 10, the receiver 100 includes a plurality of wave receivers 110-1 to 110-n, a plurality of FIR filters 120-1 to 120-n, and a synthesis unit 130. Here, n indicates an integer of 2 or more. The wave receivers 110-1 to 110-n receive sound waves coming from the outside. The wave receivers 110-1 to 110-n convert the received sound waves into electric signals and output the electric signals to the FIR filters 120-1 to 120-n. The FIR filters 120-1 to 120-n perform FIR filtering processing on the electric signals of the sound waves received by the wave receivers 110-1 to 110-n. The synthesis unit 130 synthesizes the electric signals subjected to the FIR filtering processing. As a result, the SNR can be improved and unnecessary waves can be removed.

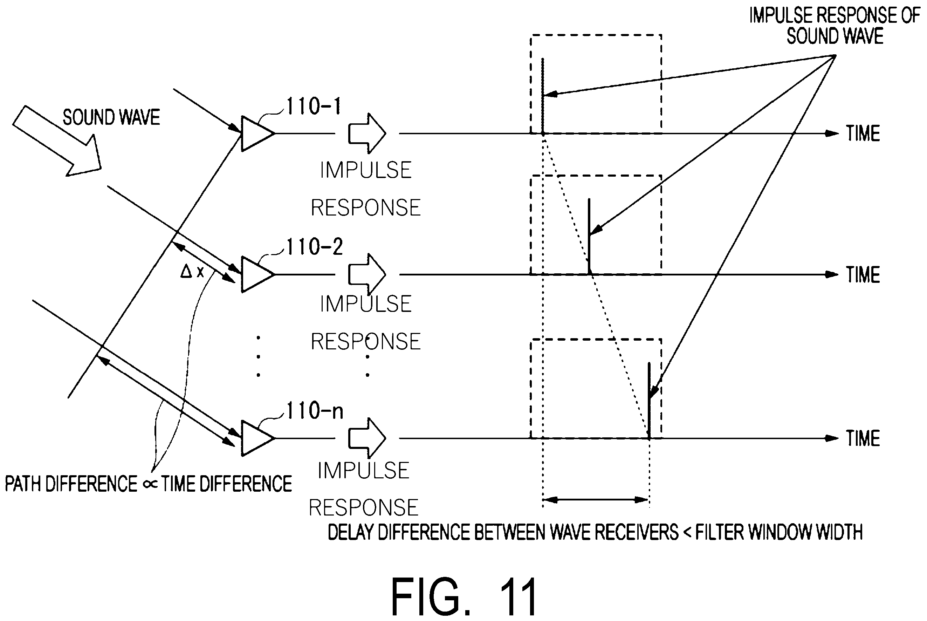

The propagation speed of sound in water is about 1,500 m/s, which is about 200,000 times slower than the propagation speed of radio waves. Therefore, in the configuration illustrated in Fig. 10, the arrival time difference caused by the path difference between the wave receivers 110-1 to 110-n is 200,000 times larger than the arrival time difference caused by the radio wave. Fig. 11 is a diagram illustrating a relationship between a sound wave arriving from one arrival direction and an impulse response observed by each of the wave receivers 110-1 to 110-n. As illustrated in Fig. 11, a path difference occurs between the wave receivers 110-1 to 110-n unless a sound wave arrives from the front.

When the symbol rate of the signal is Fs, the path difference between the wave receiver 110-1 and the wave receiver 110-2 is Δx, and the propagation speed is c, the reception signal of the wave receiver 110-2 is delayed by FsΔx/c symbol with respect to the reception signal of the wave receiver 110-1. For example, in a case where the symbol rate Fs is 100 kHz and the path difference Δx is 0.1 m, the delay of radio wave is delayed by 3.3×10⁻⁵ symbols (that is, less than 1 symbol), whereas the underwater sound is delayed by 6.7 symbols. As described above, in the radio wave, in a case where the symbol rate is on the order of GHz or less, the delay between the wave receivers (antennas) is less than one symbol. Therefore, signal processing such as direction separation can be realized only by the phase shifter. On the other hand, in underwater acoustic communication, a delay of 1 symbol or more occurs at a symbol rate of an order of several tens of kHz. Therefore, when signal processing is applied at a symbol rate, it is necessary to consider a delay time difference.
Patent document WO2021001870A1 discloses a communication device including a channel estimation unit configured to estimate an impulse response based on signals of sound waves received by each of a plurality of hydrophones, a long delay removal unit configured to remove a long-delay impulse response from the impulse response to generate a post-removal impulse response, a weighting factor calculation unit configured to calculate a weighting factor based on the post-removal impulse response, and a synthesizing unit configured to synthesize the signals received by each of the plurality of hydrophones based on the weighting factor.
The doctoral dissertation "Adaptive Reception for Underwater Communications" by Spyridon Dessalermos (Naval Postgraduate School, 2011) presents the development of an adaptive receiver for underwater acoustic communications adressing the challenges of multipath propagation, Doppler distortion, and noise by introducing channel estimation techniques based on DSSS signals and innovative equalizer designs, including Kalman filter approaches.
The document "Field Experiments Demonstrating Mbps-Class Underwater Acoustic Communication with Spatio-Temporal Equalization" by Hiroyuki Fukumoto et Al (IEEE, 2020) reports on field experiments demonstrating Mbps-class underwater acoustic communication using a spatio-temporal equalizer and its MIMO extension. The study addresses challenges of inter-symbol interference and long-delay multipath effects in underwater channels.
Patent document US2019068273A1 discloses a method wherein in receiving radio waves from a transmitter by an array antenna, and estimating an arrival direction of a direct wave, delay times of the arriving waves are estimated by means of a super-resolution process based on transmission channel estimation results, an arriving wave component corresponding to the delay time having been determined to be equal to or longer than a threshold value is removed from the transmission channel estimation results, arriving wave components after the removal are separated from each other to extract direct wave components, and an arrival angle is estimated.

### Citation List

### Non Patent Literature

Non Patent Literature 1: Robert S. H. Istepanian and Milica Stojanovic, "Underwater Acoustic Digital Signal Processing and Communication Systems," Springer Science + Business Media, LLC.
Non Patent Literature 2: Hiroyuki Fukumoto, Youske Fujino, Marina Nakano, Toshimitsu Tsubaki, Ikko Sakamoto, "Study on spatiotemporal equalization for speeding up subsea acoustic communication," IEICE Technical Report vol. 119, no. 296, RCS2019-233, pp. 169-174, November 2019.

### Summary of Invention

### Technical Problem

As described above, in a configuration having a plurality of wave receivers, in order to synthesize sound waves arriving from a certain direction, it is necessary to consider a delay time between the wave receivers. Therefore, as illustrated in Fig. 11, it is necessary to set the tap length of the FIR filter to be larger than the arrival time difference between the wave receivers, and to absorb the delay difference by calculation processing of the FIR filter. When the difference in delay time between the wave receivers is taken into consideration, there is a problem that the number of taps of the FIR filter becomes large and the operation amount becomes large.

Furthermore, in a case where the FIR filter is to be controlled by an adaptive algorithm such as a recursive least square (RLS) method or a least mean square (LMS) method, since the total number of taps of the filter determines the convergence speed, the convergence speed decreases as the number of taps increases, which causes deterioration in compensation performance. However, if the length of the FIR filter is made shorter than the arrival time difference between the wave receivers for the purpose of improving the convergence speed and reducing the amount of calculation, there is a problem that the bit error rate (BER) characteristic of the sound wave from the arrival direction in which the sound wave cannot be synthesized is deteriorated because the arrival direction in which the sound wave cannot be synthesized occurs.

In view of the above circumstances, an object of the present invention is to provide a technique capable of synthesizing signals received by a wave receiver while suppressing the number of taps of an FIR filter.

### Solution to Problem

An aspect of the present invention is a receiver according to claim 1.

A further aspect of the present invention is a receiving method according to claim 5.

### Advantageous Effects of Invention

According to the present invention, it is possible to synthesize signals received by a wave receiver while suppressing the number of taps of an FIR filter.

### Brief Description of Drawings

Fig. 1 is a diagram for illustrating an outline of the present invention.
Fig. 2 is a diagram illustrating a configuration of a receiver in a first embodiment.
Fig. 3 is a diagram illustrating an example of a data frame received by a wave receiver in the first embodiment.
Fig. 4 is a flowchart illustrating a flow of processing of a receiver in the first embodiment according to the first embodiment.
Fig. 5 is a diagram illustrating arrangement of a wave transmitter and a wave receiver during simulation.
Fig. 6 is a diagram illustrating a simulation result in the first embodiment.
Fig. 7 is a diagram illustrating a configuration of a receiver in a modification example of the first embodiment.
Fig. 8 is a diagram for illustrating an outline of a calculation method of a deviation from a reference time in a second embodiment.
Fig. 9 is a diagram illustrating a configuration of a receiver in the second embodiment.
Fig. 10 is a diagram illustrating a configuration of a conventional receiver.
Fig. 11 is a diagram illustrating a relationship between a sound wave arriving from one arrival direction and an impulse response observed by each of wave receivers 110-1 to 110-n.

### Description of Embodiments

Embodiments of the present invention will be described below with reference to the drawings.

### (Outline)

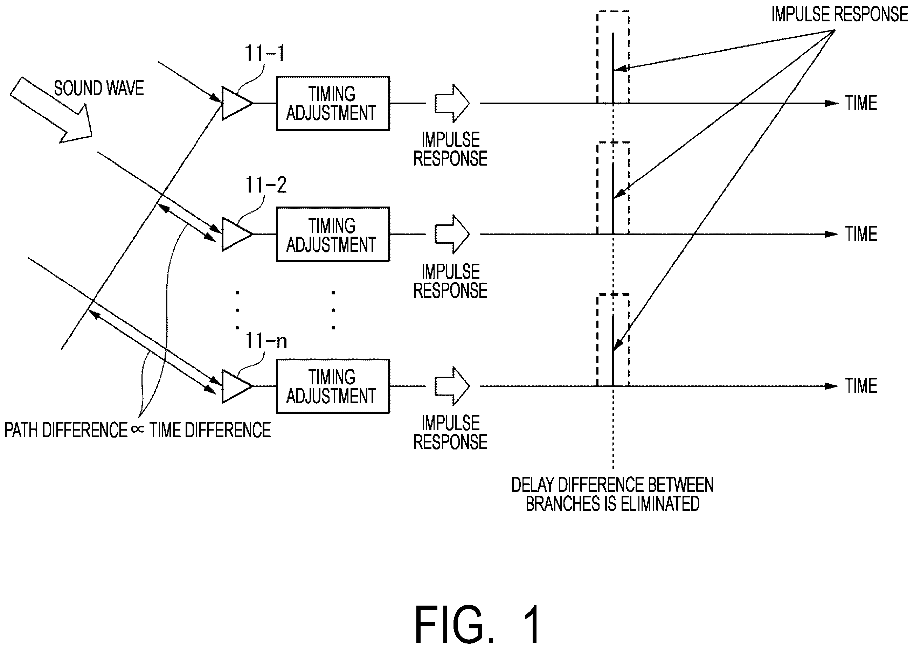

Fig. 1 is a diagram illustrating an outline of the present invention. In the present invention, at a stage preceding the FIR filter, a deviation in arrival time between wave receivers 11-1 to 11-n is estimated in advance based on a signal arriving from a predetermined direction, and the deviation in reception signal is adjusted based on an estimation result. By performing such timing adjustment, a deviation in arrival time caused by a path difference immediately before the FIR filter is compensated for. As a result, it is possible to eliminate apparent the arrival time difference between the wave receivers 11-1 to 11-n, and even in a case where the tap length of the FIR filter is shorter than the arrival time difference between the wave receivers 11-1 to 11-n, it is possible to synthesize sound waves in all arrival directions.

Hereinafter, a configuration for obtaining the above effect will be described.

### (First Embodiment)

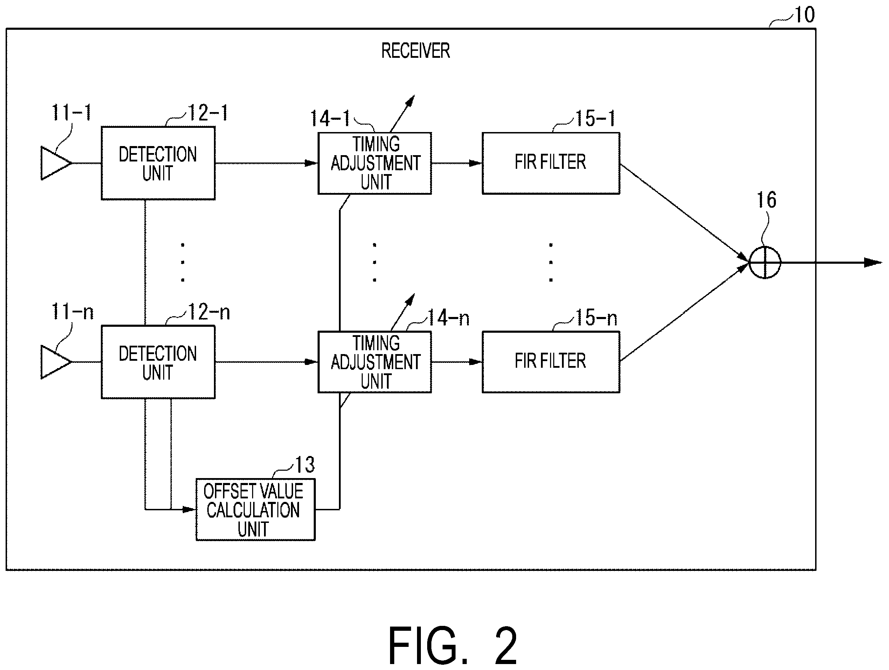

Fig. 2 is a diagram illustrating a configuration of a receiver 10 in a first embodiment. The receiver 10 is a receiver used for underwater acoustic communication. The receiver 10 includes a plurality of wave receivers 11-1 to 11-n, a plurality of detection units 12-1 to 12-n, an offset value calculation unit 13, a plurality of timing adjustment units 14-1 to 14-n, a plurality of FIR filters 15-1 to 15-n, and a synthesis unit 16.

The wave receivers 11-1 to 11-n receive sound waves arriving from the outside. For example, the wave receivers 11-1 to 11-n receive sound waves arriving from a direction in which a path difference occurs. The direction in which the path difference occurs is, for example, a direction other than the front direction of the wave receivers 11-1 to 11-n. The wave receivers 11-1 to 11-n convert the received sound waves into electrical signals and output the electrical signals as reception signals to the detection units 12-1 to 12-n.

The detection units 12-1 to 12-n detect the reception signals output from the wave receivers 11-1 to 11-n.

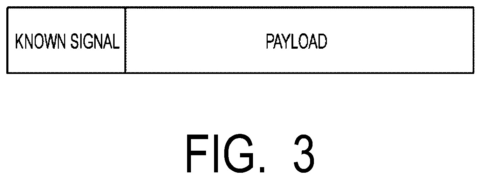

In the detection method of the reception signal, for example, a transmission-side device may add a known signal to a data frame and transmit the data frame as illustrated in Fig. 3, and detect the reception signal by detecting peaks from cross-correlation between the known signal and the received signal in the detection units 12-1 to 12-n. The transmission-side device may transmit a repeated known signal in a data frame, and detect the reception signal by detecting a peak from autocorrelation of the reception signal in the detection units 12-1 to 12-n. The reception signals detected by the detection units 12-1 to 12-n are signals from a desired arrival direction.

The detection units 12-1 to 12-n detect the time when the sound wave reaches the wave receivers 11-1 to 11-n by detecting the known signal included in the reception signal. The detection units 12-1 to 12-n output the detected time information to the offset value calculation unit 13.

The offset value calculation unit 13 calculates a deviation from the reference time for each of the reception signals detected by the detection units 12-1 to 12-n based on the difference between the reference time and the arrival time of the reception signal detected by each of the detection units 12-1 to 12-n.

The reference time may be, for example, a time when the sound wave reaches any one of the wave receivers 11-1 to 11-n, a time set in advance by a user of the receiver 10, or any one of an average time, a median value, a latest time, and an earliest time of the time when the sound wave reaches the wave receivers 11-1 to 11-n.

The timing adjustment units 14-1 to 14-n adjust the deviation (for example, advance or delay) of the reception signal from the reference time based on the deviation of each reception signal from the reference time calculated by the offset value calculation unit 13. Here, adjusting the deviation (for example, advance or delay) of the reception signal from the reference time means performing adjustment so as to reduce the deviation. For example, adjusting the deviation (for example, advance or delay) of the reception signal from the reference time means adjusting the deviation to be zero. The timing adjustment unit 14 is an aspect of an adjustment unit.

The FIR filters 15-1 to 15-n receive the reception signals adjusted by the timing adjustment units 14-1 to 14-n and perform FIR filtering processing. The FIR filters 15-1 to 15-n may be configured such that the filter coefficients are adaptively controlled by an adaptive algorithm such as an RLS method or an LMS method, or the filter coefficients may be set based on a channel estimation result using a pilot signal. The FIR filters 15-1 to 15-n may constitute a feedback filter of a decision feedback type in which a sequence obtained by symbol-determining the addition result of the outputs of the FIR filters 15-1 to 15-n is input, and the output result of the feedback filter may be further added to or subtracted from the addition result of the outputs of the FIR filters 15-1 to 15-n. The adaptive algorithm may simultaneously control the filter coefficients of the FIR filters 15-1 to 15-n and the filter coefficients of the feedback filter.

The synthesis unit 16 adds the outputs of the FIR filters 15-1 to 15-n. Demodulation processing including symbol determination is performed based on the addition result by the synthesis unit 16.

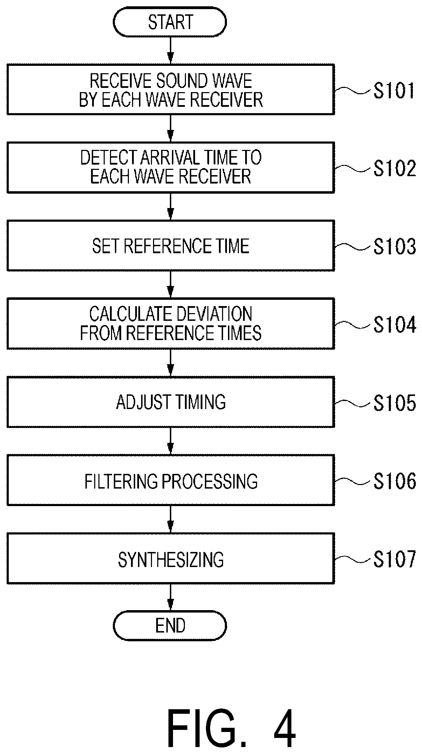

Fig. 4 is a flowchart illustrating a flow of processing of the receiver 10 according to the first embodiment. Note that, in Fig. 4, on the assumption that the data frame illustrated in Fig. 3 is received by the receiver 10, a method of correcting the timing of the reception signal received by the wave receivers 11-1 to 11-n with the arrival time of the latest data frame among the N wave receivers 11 as a reference time will be described.

The wave receivers 11-1 to 11-n receive data frames (sound waves) arriving from the outside (step S101). The wave receivers 11-1 to 11-n convert the received data frames (sound waves) into electrical signals and output the electrical signals as reception signals to the detection units 12-1 to 12-n. The detection units 12-1 to 12-n detect the time when the data frame reaches the wave receivers 11-1 to 11-n by detecting the known signal added to the head of the reception signals output from the wave receivers 11-1 to 11-n (step S102). The detection units 12-1 to 12-n output the detected time information to the offset value calculation unit 13.

Using the time information output from the detection units 12-1 to 12-n, the offset value calculation unit 13 compares the arrival time of the data frame among the wave receivers 11-1 to 11-n. The offset value calculation unit 13 sets the latest arrival time as a reference time (step S103). Based on the set reference time and the arrival times at the wave receivers 11-1 to 11-n, the offset value calculation unit 13 calculates the deviation of the reception signal of each wave receiver 11-i (i is 1,..., n) from the reference time using Equation (1) below (step S104).$Deviation from reference time = \left(Reference time\right) - \left(Arrival time of wave receiver 11-i\right)$ Equation (1)

The offset value calculation unit 13 outputs information on the calculated deviation from the reference time to the timing adjustment unit 14-i corresponding to the wave receiver 11-i. For example, the offset value calculation unit 13 outputs information on a deviation between the arrival time of the data frame at the wave receiver 11-1 and the reference time to the timing adjustment unit 14-1. For example, the offset value calculation unit 13 outputs information on a deviation between the arrival time of the data frame at the wave receiver 11-n and the reference time to the timing adjustment unit 14-n.

The timing adjustment unit 14-i pads zero at the head of the data frame based on the deviation information output from the offset value calculation unit 13 (step S105). Specifically, the timing adjustment unit 14-i pads zero at the head of the data frame so that the deviation indicated by the deviation information output from the offset value calculation unit 13 becomes zero. As a result, the head positions of the data frames received by all the wave receivers 11-i are aligned with the reference time. The timing adjustment unit 14-i outputs the adjusted data frame to the FIR filter 15-i.

The FIR filter 15-i performs filtering processing using the output from the timing adjustment unit 14-i as an input signal (step S106). The signals filtered by the FIR filter 15-i are synthesized by the synthesis unit 16 (step S107).

### (Simulation Evaluation)

Next, the BER characteristics with respect to the number of taps of the FIR filter in a case where the correction based on the arrival time between the wave receivers 11 is performed as in the first embodiment and in a case where the correction is not performed are compared. The simulation was performed under the following conditions.
· Modulation scheme: Quadrature Phase Shift Keying (QPSK)
· Bandwidth: 200 kHz
· Center frequency: 300 kHz
· Transmission antenna: two antennas
· Reception antenna: two antennas
· Electric Bit to Noise (Eb/No): 13dB
· Transmission method: single carrier

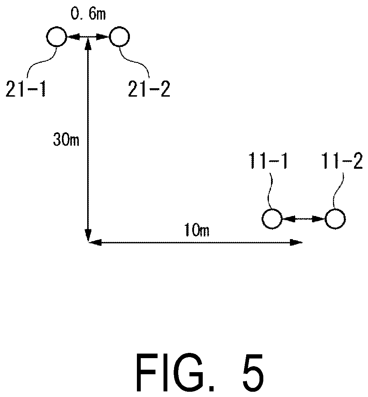

Fig. 5 is a diagram illustrating arrangement of transmitters 21-1 and 21-2 and the wave receivers 11-1 and 11-2 during simulation. As illustrated in Fig. 5, in this simulation, BER characteristics of transmitter 21-1 are compared assuming 2×2 Multiple Input Multiple Output (MIMO). The FIR filter 15 learns an error between the known signal and the filter output as a cost by the RLS method.

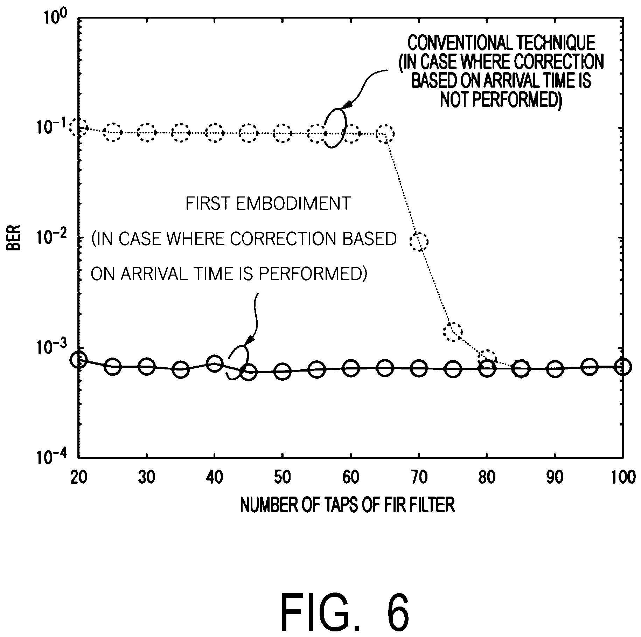

Fig. 6 is a diagram illustrating a simulation result in the first embodiment. In Fig. 6, the horizontal axis represents the number of taps of the FIR filter, and the vertical axis represents BER. As illustrated in Fig. 6, in a case where the correction based on the arrival time between the wave receivers 11 is performed as in the first embodiment, the BER is constant regardless of the number of taps of the FIR filter. On the other hand, in the conventional method, the BER characteristic is deteriorated when the number of taps of the FIR filter is less than 85. As described above, it can be seen that the BER characteristic of the receiver end is not deteriorated even if the tap length of the FIR filter 15 is set to be short by application of the present invention.

According to the receiver 10 configured as above, the receiver 10 includes the plurality of wave receivers 11-1 to 11-n that receive data frames arriving from a predetermined direction, the plurality of detection units 12-1 to 12-n that are connected to the plurality of wave receivers 11-1 to 11-n and detect arrival times of the data frames received by the connected wave receivers 11-1 to 11-n, the plurality of timing adjustment units 14-1 to 14-n that adjust a deviation between arrival times of the plurality of wave receivers 11-1 to 11-n based on the arrival times of the plurality of detected data frames, the plurality of FIR filters 15-1 to 15-n that perform filtering processing using the adjusted data frames as input signals, and the synthesis unit 16 that synthesize output results of the plurality of FIR filters 15-1 to 15-n. By adjusting the deviation in arrival time in this manner, the head positions of the data frames received by the plurality of wave receivers 11-1 to 11-n are aligned with the reference time. Therefore, even in a case where the tap length of the FIR filter is shorter than the arrival time difference between the wave receivers 11-1 to 11-n, it is possible to synthesize sound waves in all arrival directions. With such a configuration, even if the tap length of the FIR filter is set short, the BER characteristic of the receiver end is not deteriorated. As a result, the required tap length of the FIR filter is shortened, and the operation amount can be reduced. In a case where the FIR filter is controlled by the adaptive algorithm, the convergence speed of the adaptive algorithm is improved.

The receiver 10 further includes an offset value calculation unit 13 that calculates a deviation between the arrival time of the data frame received by each of the wave receivers 11-i and the reference time. The plurality of timing adjustment units 14-i adjust each data frame received by each of the wave receivers 11-i to reduce the deviation calculated by the offset value calculation unit 13. As a result, it is possible to reduce the deviation of the arrival time (for example, a delay) caused by the path difference. Therefore, even in a case where the tap length of the FIR filter is shorter than the arrival time difference between the wave receivers 11-1 to 11-n, it is possible to synthesize sound waves in all arrival directions.

The receiver 10 sets the time obtained based on the arrival times detected by the plurality of detection units 12-i as the reference time. Here, the time obtained based on the arrival time is any of the time when the sound wave arrives, the time set in advance by the user of the receiver 10, the average time, the median value, the latest time, and the earliest time of the time when the sound wave arrives at the wave receivers 11-1 to 11-n. As a result, it is possible to set the reference time for adjusting the deviation of the arrival time caused by the path difference. As a result, the deviation in arrival time caused by the path difference can be adjusted. Therefore, even in a case where the tap length of the FIR filter is shorter than the arrival time difference between the wave receivers 11-1 to 11-n, it is possible to synthesize sound waves in all arrival directions.

### (Modification Example of First Embodiment)

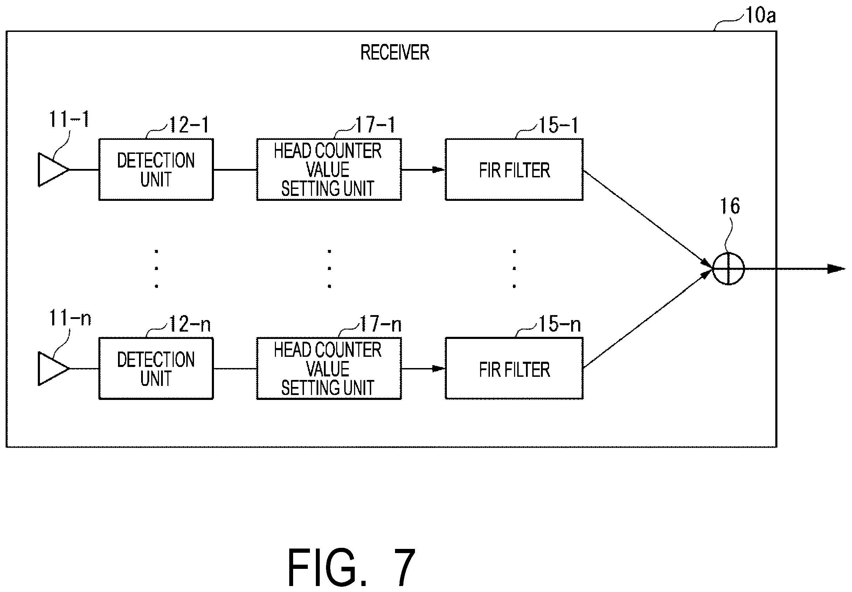

The receiver 10 illustrated in Fig. 2 may be configured to include head counter value setting units 17-1 to 17-n illustrated in Fig. 7 instead of the offset value calculation unit 13 and the timing adjustment units 14-1 to 14-n. With this configuration, it is possible to compensate for the difference in arrival time between the wave receivers 11-1 to 11-n without correcting the reception signal on the time axis.

Fig. 7 is a diagram illustrating a configuration of a receiver 10a in a modification example of the first embodiment. The receiver 10a includes the plurality of wave receivers 11-1 to 11-n, the plurality of detection units 12-1 to 12-n, the plurality of head counter value setting units 17-1 to 17-n, the plurality of FIR filters 15-1 to 15-n, and the synthesis unit 16. The receiver 10a is different from the receiver 10 in including head counter value setting units 17-1 to 17-n instead of the offset value calculation unit 13 and the timing adjustment units 14-1 to 14-n. The other configurations of the receiver 10a are similar to those of the receiver 10. Therefore, only the difference will be described.

The head counter value setting unit 17-i holds the sample number of the reception signal at the head position of the data frame detected by the detection unit 12-i. For example, a reception signal sequence of the wave receiver 11-i is set as rᵢ(m) (m is an index of time), and m=Mᵢ is a head position of the data frame. The head counter value setting unit 17-i holds Mᵢ. In a case of calculating the output at the time k, the head counter value setting unit 17-i sets the input signal to the FIR filter 15-i based on Equation (2) below using the held parameter Mᵢ. The head counter value setting unit 17-i is an aspect of an adjustment unit.$Ri \left(k\right) = \left({r}_{i}\left({M}_{i}+k\right),…,{r}_{1}\left({M}_{i}+k-{N}_{t}\right)\right)$ Equation (2)

In Equation (2), Nₜ represents the number of taps of the FIR filter 15-i. With such a configuration, it is possible to realize processing similar to that of the first embodiment in which the correction between the wave receivers 11-i is performed on the time axis.

### (Second Embodiment)

In the first embodiment, the configuration in which the data frames received by all the wave receivers 11-i are detected has been described. The second embodiment is different from the first embodiment in that some data frames of a wave receiver 11-i are detected and arrival times of all wave receivers 11-i are estimated based on the arrival times of the detected data frames.

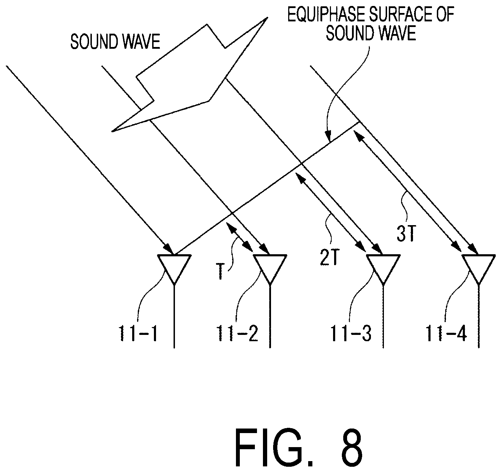

First, a calculation method of a deviation from a reference time in the second embodiment will be described. Fig. 8 is a diagram for illustrating an outline of a calculation method of a deviation from a reference time in a second embodiment. Fig. 8 illustrates a linear array in which the wave receivers 11-1 to 11-4 are arranged in a line at equal intervals. As illustrated in Fig. 8, it is assumed that a sound wave arrives from an arrival direction in a linear array of four elements. In this case, the time difference of arrival time of the wave receiver 11-1 from the wave receiver 11-2 to the wave receiver 11-4 changes linearly.

Therefore, when the arrival time of one or more data frames of the wave receivers 11-2 to 11-4 and the positional relationship of the wave receiver 11-i are known based on the arrival time of the data frame received by the wave receiver 11-1, the gradient of the arrival timing (parameter defined as T in Fig. 8) can be estimated. With such a configuration, it is possible to estimate the time when the data frame reaches all the wave receivers 11-i without detecting the data frames received by all the wave receivers 11-i. As a result, the deviation from the reference time can be calculated without detecting the data frames received by all the wave receivers 11-i.

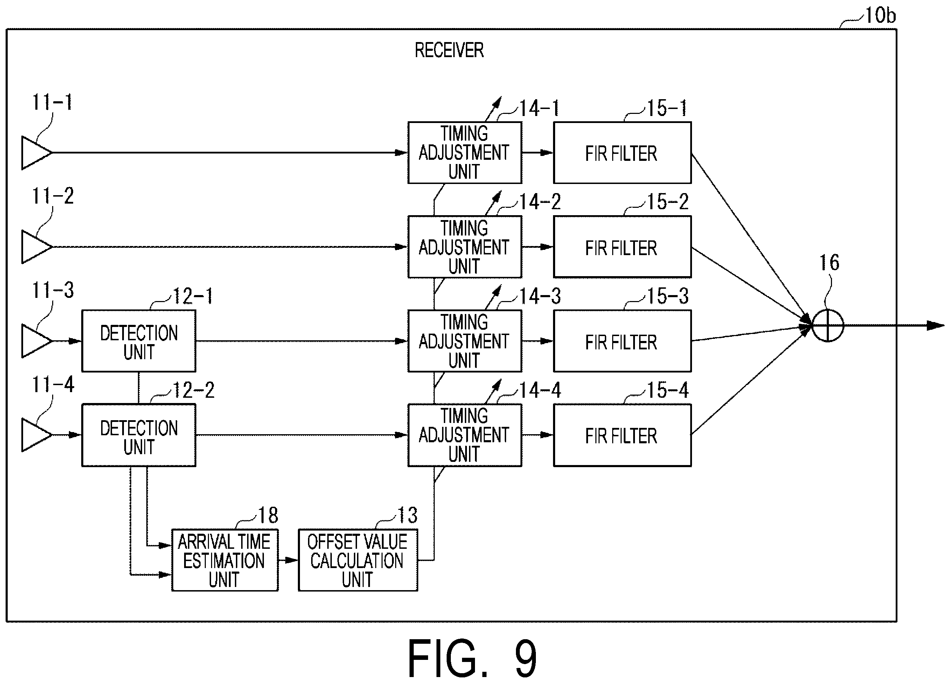

Fig. 9 is a diagram illustrating a configuration of a receiver 10b in the second embodiment. The receiver 10b is a receiver used for underwater acoustic communication. The receiver 10b includes the plurality of wave receivers 11-1 to 11-4, the plurality of detection units 12-1 and 12-2, the offset value calculation unit 13, the plurality of timing adjustment units 14-1 to 14-4, the plurality of FIR filters 15-1 to 15-4, the synthesis unit 16, and an arrival time estimation unit 18.

Fig. 9 illustrates, as an example, a configuration in which four wave receivers 11, four timing adjustment units 14, and two FIR filters 15, and two detection units 12 are provided, but the number of wave receivers 11, the timing adjustment units 14, and the number of FIR filters 15 may be three (n = 3) or more and the same number may be provided. Furthermore, the number of detection units 12 may be at least 2 (n-1), which is smaller than the number of wave receivers 11, the number of timing adjustment units 14, and the number of FIR filters 15.

In Fig. 9, the detection unit 12-1 is connected to the wave receiver 11-3, and the detection unit 12-2 is connected to the wave receiver 11-4. As described above, the detection unit 12 is provided in some wave receiver 11 of the N (4 in Fig. 9) wave receivers 11. The detection units 12-1 and 12-2 detect a reception signal output from the connected wave receiver 11 (for example, the wave receivers 11-3 and 11-4). Further, the detection units 12-1 and 12-2 detect the arrival time of the data frame.

The arrival time estimation unit 18 estimates arrival times of all the wave receivers 11-i based on the arrival times obtained by the detection units 12-1 and 12-2. Any algorithm may be used to estimate the arrival time. For example, from the linear independence, in the case of a linearly arranged array, the arrival times of all the wave receivers 11-i can be estimated theoretically based on the information of the arrival time difference of the data frames between two or more wave receivers 11-i. Alternatively, in the case of an array arranged in a planar manner, arrival times of all wave receivers 11 i in theory can be estimated based on information (for example, the arrival time difference of the wave receiver 11-2 and the arrival time difference of the wave receiver 11-3 with reference to the wave receiver 11-1) of arrival time differences of data frames between three or more wave receivers 11-i.

The offset value calculation unit 13 calculates a deviation from the reference time for each of the wave receivers 11-i based on the difference between the reference time and the arrival times of all the wave receivers 11-i obtained by the arrival time estimation unit 18.

According to the receiver 10b configured as described above, it is not necessary to detect the data frames received by all the wave receivers 11-i, and it is possible to greatly reduce the amount of calculation required for frame detection when using an enormous number of wave receivers 11-i.

The timing adjustment unit 14 may adjust a deviation in arrival time between the plurality of wave receivers 11 based on the detected arrival directions of the plurality of detected signals.

Some functional units of the receivers 10, 10a, and 10b in the above-described embodiments may be implemented by a computer. In that case, a program for implementing these functions may be recorded in a computer-readable recording medium, and the program recorded in the recording medium may be read and executed by a computer system to implement the functions. The "computer system" mentioned herein includes an OS and hardware such as a peripheral device.

The "computer-readable recording medium" refers to a portable medium such as a flexible disk, a magneto-optical disc, a ROM, or a CD-ROM, or a storage device such as a hard disk included in the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside the computer system serving as a server or a client in that case. Also, the above program may be for implementing some of the functions described above, may be formed with a combination of the functions described above and a program already recorded in the computer system, or may be formed with a programmable logic device such as an FPGA.

As above, the embodiments of the present invention have been described in detail with reference to the drawings.

### Industrial Applicability

The present invention can be applied to a technology of underwater acoustic communication.

### Reference Signs List

- 10, 10a,: 10b Receiver
- 11-1 to 11-n: Wave receiver
- 12-1 to 12-n: Detection unit
- 13: Offset value calculation unit
- 14-1 to 14-n: Timing adjustment unit
- 15-1 to 15-n: FIR filter
- 16: Synthesis unit
- 17-1 to 17-n: Head counter value setting unit
- 18: Arrival time estimation unit

## Claims

1. A receiver (10, 10b) comprising:
a plurality of wave receivers (11-1 to 11-n) configured to receive sound waves arriving from a predetermined direction and convert the sound waves into electrical signals;
a plurality of detection units (12-1 to 12-n) connected to at least some of the plurality of wave receivers (11-1 to 11-n) and configured to detect arrival times of sound waves received by each of the connected wave receivers (11-1 to 11-n) based on the electrical signals; and
a plurality of adjustment units (14-1 to 14-n) configured to adjust a deviation of the arrival times of sound waves between the plurality of wave receivers (11-1 to 11-n) based on the detected arrival times of sound waves, wherein the receiver further comprises:
an offset value calculation unit (13) configured to calculate a deviation between the arrival time of sound waves received by each wave receiver (11-1 to 11-n) and a reference time,
a plurality of finite impulse response, FIR, filters (15-1 to 15-n) configured to perform filtering processing using the outputted signals of the plurality of adjustment units as input signals; and
a synthesis unit (16) configured to synthesize the output results of the plurality of FIR filters (15-1 to 15-n),
wherein the plurality of adjustment units (14-1 to 14-n) is further configured to adjust each sound wave received by each of the plurality of wave receivers (11-1 to 11-n) so as to reduce the deviation calculated by the offset value calculation unit (13).

2. The receiver (10, 10b) according to claim 1, wherein the offset value calculation unit (13) is configured to set a time based on arrival times detected by the plurality of detection units (12-1 to 12-n) or a preset time as the reference time.

3. The receiver (10b) according to claim 1 or 2, further comprising:
an arrival time estimation unit (18) configured to estimate an arrival time of a sound wave received by each wave receiver based on an arrival time of a sound wave received by the wave receiver to which the plurality of detection units (12-1 to 12-n) are connected, wherein
the offset value calculation unit (13) is configured to calculate a deviation between an arrival time of a sound wave received by each wave receiver estimated by the arrival time estimation unit (18) and the reference time.

4. The receiver according to any one of claims 1 to 3, wherein the plurality of adjustment units (14-1 to 14-n) is configured to align a header of the each sound waves by padding the heads of the sound waves with zeros based on the deviation calculated by the offset value calculation unit (13).

5. A receiving method comprising:
detecting arrival times of sound waves received by at least two or more wave receivers among a plurality of wave receivers that receive the sound waves arriving from a predetermined direction; and
adjusting a deviation of the arrival times of sound waves between the plurality of wave receivers based on the detected arrival times of the plurality of sound waves received by the at least two or more wave receivers, wherein the receiving method further comprises:
calculating a deviation between the arrival time of sound waves received by each wave receiver and a reference time,
performing, by a plurality of finite impulse response (FIR) filters, filtering processing using the adjusted sound waves which were adjusted by adjusting the deviation of the arrival times of sound waves between the plurality of wave receivers as input signals; and
synthesizing the output results of the plurality of FIR filters, wherein
the adjusting further comprises adjusting each sound wave received by each of the plurality of wave receivers so as to reduce the deviation calculated.

## Patentansprüche

1. . Empfänger (10, 10b), umfassend:
eine Vielzahl von Wellenempfängern (11-1 bis 11-n), die so konfiguriert sind, dass sie aus einer vorbestimmten Richtung ankommende Schallwellen empfangen und die Schallwellen in elektrische Signale umwandeln;
eine Vielzahl von Erfassungseinheiten (12-1 bis 12-n), die mit mindestens einigen der Vielzahl von Wellenempfängern (11-1 bis 11-n) verbunden und so konfiguriert sind, dass sie Ankunftszeiten von Schallwellen, die von jedem der verbundenen Wellenempfänger (11-1 bis 11-n) empfangen werden, basierend auf den elektrischen Signalen erfassen; und
eine Vielzahl von Anpassungseinheiten (14-1 bis 14-n), die so konfiguriert sind, dass sie eine Abweichung der Ankunftszeiten von Schallwellen zwischen der Vielzahl von Wellenempfängern (11-1 bis 11-n) basierend auf den erfassten Ankunftszeiten der Schallwellen anpassen,
wobei der Empfänger ferner umfasst:
eine Offset-Wert-Berechnungseinheit (13), die so konfiguriert ist, dass sie eine Abweichung zwischen der Ankunftszeit der von jedem Wellenempfänger (11-1 bis 11-n) empfangenen Schallwellen und einer Referenzzeit berechnet,
eine Vielzahl von Filtern mit endlicher Impulsantwort, FIR-Filter, (15-1 bis 15-n), die so konfiguriert sind, dass sie eine Filterverarbeitung unter Verwendung der von der Vielzahl von Anpassungseinheiten ausgegebenen Signale als Eingangssignale durchführen; und
eine Syntheseeinheit (16), die so konfiguriert ist, dass sie die Ausgangsergebnisse der Vielzahl von FIR-Filtern (15-1 bis 15-n) synthetisieren,
wobei
die Vielzahl von Anpassungseinheiten (14-1 bis 14-n) ferner so konfiguriert sind, dass sie jede von der Vielzahl von Wellenempfängern (11-1 bis 11-n) empfangene Schallwelle anpassen, um die von der Offset-Wert-Berechnungseinheit (13) berechnete Abweichung zu verringern.

2. . Empfänger (10, 10b) nach Anspruch 1, wobei die Offset-Wert-Berechnungseinheit (13) so konfiguriert ist, dass sie eine Zeit basierend auf den von der Vielzahl von Erfassungseinheiten (12-1 bis 12-n) erfassten Ankunftszeiten oder eine voreingestellte Zeit als Referenzzeit festlegt.

3. . Empfänger (10b) nach Anspruch 1 oder 2, ferner umfassend:
eine Ankunftszeit-Schätzungseinheit (18), die so konfiguriert ist, dass sie eine Ankunftszeit einer von jedem Wellenempfänger empfangenen Schallwelle basierend auf der Ankunftszeit einer Schallwelle schätzt, die von dem Wellenempfänger empfangen wird, an den die Vielzahl von Erfassungseinheiten (12-1 bis 12-n) angeschlossen sind, wobei
die Offset-Wert-Berechnungseinheit (13) so konfiguriert ist, dass sie eine Abweichung zwischen einer Ankunftszeit einer von jedem Wellenempfänger empfangenen Schallwelle, die von der Ankunftszeit-Schätzungseinheit (18) geschätzt wird, und der Referenzzeit berechnet.

4. . Empfänger nach einem der Ansprüche 1 bis 3, wobei die Vielzahl von Anpassungseinheiten (14-1 bis 14-n) so konfiguriert sind, dass sie eine Wellenfront jeder Schallwelle ausrichten, indem die Wellenfronten der Schallwellen basierend auf der von der Offset-Wert-Berechnungseinheit (13) berechneten Abweichung mit Nullen aufgefüllt werden.

5. . Empfangsverfahren, umfassend:
Erfassen der Ankunftszeiten von Schallwellen, die von mindestens zwei oder mehr Wellenempfängern unter einer Vielzahl von Wellenempfängern empfangen werden, die die aus einer vorbestimmten Richtung ankommenden Schallwellen empfangen; und
Anpassen einer Abweichung der Ankunftszeiten von Schallwellen zwischen der Vielzahl von Wellenempfängern basierend auf den erfassten Ankunftszeiten der von den mindestens zwei oder mehr Wellenempfängern empfangenen Vielzahl von Schallwellen,
wobei das Empfangsverfahren ferner Folgendes umfasst:
Berechnen einer Abweichung zwischen der Ankunftszeit der von jedem Wellenempfänger empfangenen Schallwellen und einer Referenzzeit,
Durchführen einer Filterverarbeitung mittels einer Vielzahl von Filtern mit endlicher Impulsantwort (FIR-Filter) unter Verwendung der angepassten Schallwellen, die durch Anpassen der Abweichung der Ankunftszeiten der Schallwellen zwischen der Vielzahl von Wellenempfängern als Eingangssignale angepasst wurden; und
Synthetisieren der Ausgangsergebnisse der Vielzahl von FIR-Filtern,
wobei
das Anpassen ferner das Anpassen jeder von der Vielzahl von Wellenempfängern empfangenen Schallwelle umfasst, um die berechnete Abweichung zu verringern.

## Revendications

1. Récepteur (10, 10b) comprenant :
une pluralité de récepteurs d'ondes (11-1 à 11-n) configurés pour recevoir des ondes sonores arrivant d'une direction prédéterminée et convertir les ondes sonores en signaux électriques ;
une pluralité d'unités de détection (12-1 à 12-n) connectées à au moins certains de la pluralité de récepteurs d'ondes (11-1 à 11-n) et configurées pour détecter des temps d'arrivée d'ondes sonores reçues par chacun des récepteurs d'ondes (11-1 à 11-n) connectés sur la base des signaux électriques ; et
une pluralité d'unités d'ajustement (14-1 à 14-n) configurées pour ajuster un écart des temps d'arrivée d'ondes sonores entre la pluralité de récepteurs d'ondes (11-1 à 11-n) sur la base des temps d'arrivée détectés d'ondes sonores,
dans lequel le récepteur comprend en outre :
une unité de calcul de valeur de décalage (13) configurée pour calculer un écart entre le temps d'arrivée d'ondes sonores reçues par chaque récepteur d'ondes (11-1 à 11-n) et un temps de référence,
une pluralité de filtres de réponse à impulsion finie, FIR, (15-1 à 15-n) configurés pour réaliser un traitement de filtrage à l'aide des signaux de sortie de la pluralité d'unités d'ajustement comme signaux d'entrée ; et
une unité de synthèse (16) configurée pour synthétiser les résultats de sortie de la pluralité de filtres FIR (15-1 à 15-n),
dans lequel
la pluralité d'unités d'ajustement (14-1 à 14-n) est en outre configurée pour ajuster chaque onde sonore reçue par chacun de la pluralité de récepteurs d'ondes (11-1 à 11-n) de manière à réduire l'écart calculé par l'unité de calcul de valeur de décalage (13).

2. Récepteur (10, 10b) selon la revendication 1, dans lequel l'unité de calcul de valeur de décalage (13) est configurée pour définir un temps sur la base de temps d'arrivée détectés par la pluralité d'unités de détection (12-1 à 12-n) ou un temps prédéfini comme temps de référence.

3. Récepteur (10b) selon la revendication 1 ou la revendication 2, comprenant en outre :
une unité d'estimation de temps d'arrivée (18) configurée pour estimer un temps d'arrivée d'une onde sonore reçue par chaque récepteur d'ondes sur la base d'un temps d'arrivée d'une onde sonore reçue par le récepteur d'ondes auquel la pluralité d'unités de détection (12-1 à 12-n) sont connectées, dans lequel
l'unité de calcul de valeur de décalage (13) est configurée pour calculer un écart entre un temps d'arrivée d'une onde sonore reçue par chaque récepteur d'ondes estimée par l'unité d'estimation de temps d'arrivée (18) et le temps de référence.

4. Récepteur selon l'une quelconque des revendications 1 à 3, dans lequel la pluralité d'unités d'ajustement (14-1 à 14-n) est configurée pour aligner un entête de chaque onde sonore en remplissant les en-têtes des ondes sonores de zéros sur la base de l'écart calculé par l'unité de calcul de valeur de décalage (13).

5. Procédé de réception comprenant :
la détection de temps d'arrivée d'ondes sonores reçues par au moins deux récepteurs d'ondes ou plus parmi une pluralité de récepteurs d'ondes qui reçoivent les ondes sonores arrivant d'une direction prédéterminée ; et
l'ajustement d'un écart des temps d'arrivée d'ondes sonores entre la pluralité de récepteurs d'ondes sur la base des temps d'arrivée détectés de la pluralité d'ondes sonores reçues par les au moins deux récepteurs d'ondes ou plus,
dans lequel le procédé de réception comprend en outre :
le calcul d'un écart entre le temps d'arrivée d'ondes sonores reçues par chaque récepteur d'ondes et un temps de référence,
la réalisation, par une pluralité de filtres de réponse à impulsions finies (FIR), d'un traitement de filtrage à l'aide des ondes sonores ajustées qui ont été ajustées en ajustant l'écart des temps d'arrivée des ondes sonores entre la pluralité de récepteurs d'ondes en tant que signaux d'entrée ; et
la synthèse des résultats de sortie de la pluralité de filtres FIR,
dans lequel
l'ajustement comprend en outre l'ajustement de chaque onde sonore reçue par chacun de la pluralité de récepteurs d'ondes de manière à réduire l'écart calculé.
